# EUROPÄISCHE PATENTANMELDUNG

(11) **EP 1 080 990 A2**
(43) Veröffentlichungstag der Anmeldung: **07.03.2001**
(21) Anmeldenummer: 00118704.6
(22) Anmeldetag: 30.08.2000
(51) Int. Cl.: B60Q 1/076

(54) **Scheinwerfer für Fahrzeuge**

(30) Priorität: 01.09.1999 DE 19941375
(71) Anmelder: Hella KG Hueck & Co., 59552 Lippstadt (DE)
(72) Erfinder: Börnchen, Thomas, 96052 Bamberg (DE); Heitbreder, Volker, 59494 Soest (DE); Giepen, Bernd, 59597 Erwitte (DE); Lachmayer, Roland, Dr., 59581 Warstein (DE)

(57) **Zusammenfassung**

Die Erfindung bezieht sich auf einen Scheinwerfer (1) für Fahrzeuge mit einer eine Lichtquelle (3) und einen Reflektor (2) aufweisenden Lichteinheit (3),
- mit einer Stelleinrichtung (10) zum Umschalten der Lichteinheit (3) in mindestens zwei Lichtfunktionspositionen, wobei die Stelleinrichtung (10) einen Motor (13) mit einer Welle und ein mit der Welle gekoppeltes Stellmittel aufweist, das auf die Lichteinheit einwirkt, wobei das Stellmittel als mechanisches Bewegungsumwandlungsorgan (16,17,23,24,27) ausgebildet ist,
- mit einem drehbeweglich gehaltenen Grundkörper (16), der an seinem Mantel (23) ein erstes Führungselement (24) aufweist, und
- mit einem axialbeweglich gehaltenen Schiebeelement (17), das ein mit dem ersten zusammenwirkendes, zweites Führungselement aufweist, wobei
- die beiden zusammenwirkenden Führungselemente (24) eine am Mantel (23) mit einer Axialrichtungs- und einer Umfangsrichtungskomponente verlaufende Führungsbahn (29) definieren.

## Beschreibung

Die Erfindung betrifft einen Scheinwerfer für Fahrzeuge mit einer eine Lichtquelle und einen Reflektor aufweisenden Lichteinheit, mit einer Stelleinrichtung zum Umschalten der Lichteinheit in mindestens zwei Lichtfunktionspositionen, wobei die Stelleinrichtung einen Motor mit einer Welle und ein mit der Welle gekoppeltes Steilmittel aufweist, das auf die Lichteinheit einwirkt.

Aus der DE 198 57 353 A1 ist ein Scheinwerfer für Fahrzeuge bekannt, der eine Stelleinrichtung zum Umschalten der Lichteinheit von einer ersten Lichtfunktionsposition in eine zweite, nämlich von einer Abblendlichtposition in eine Fernlichtposition und vice versa, aufweist, die als Steilmittel einen Motor mit einer Schnecke und mit einem Schneckenrad umfaßt, die mit einem Mitnehmer verbunden ist. Dieser kann bei Drehung unter Mitnahme eines Bewegungsarms, der senkrecht zur Schnecke des Motors angeordnet ist, von einer ersten in eine zweite Betriebsposition verbracht werden, so daß ein mit der Lichtquelle fest verbundener Stellstift mittels exzentrischer Lagerung an einer mit der Schwenkachse verbundenen Nockenscheibe im wesentlichen parallel zur optischen Achse der Lichtquelle verschoben werden kann. Nachteilig bei der bekannten Stelleinrichtung ist, daß sie recht aufwendig ist und ein relativ großes Spiel besitzt.

Aufgabe der vorliegenden Erfindung ist es, einen Scheinwerfer für Fahrzeuge derart weiterzubilden, daß eine Lichteinheit zuverlässig und sicher in mindestens zwei Lichtfunktionspositionen verbringbar ist, wobei Spielfreiheit gegeben ist.

Zur Lösung dieser Aufgabe ist der erfindungsgemäße Scheinwerfer in Verbindung mit dem Oberbegriff des Patentanspruchs 1 dadurch gekennzeichnet, daß das Stellmittel als mechanisches Bewegungsumwandlungsorgan ausgebildet ist, mit einem drehbeweglich gehaltenen Grundkörper, der an seinem Mantel ein erstes Führungselement aufweist, und mit einem axialbeweglich gehaltenen Schiebeelement, das ein mit dem ersten zusammenwirkendes, zweites Führungselement aufweist, wobei die beiden zusammenwirkenden Führungselemente eine am Mantel mit einer Axialrichtungs- und einer Umfangsrichtungskomponente verlaufende Führungsbahn definieren.

Dadurch, daß das mechanische Bewegungsumwandlungsorgan einen Grundkörper als drehbewegliches Element und ein Schiebeelement als Linearbewegungselement aufweist, wobei der Grundkörper und das Schiebeelement mittels zusammenwirkender Führungselemente mechanisch so gekoppelt sind, daß sich beim Drehen des Grundkörpers das Schiebeelement linear in Axialrichtung bewegt, wird eine sichere, zuverlässige und nur relativ wenig Einbauraum benötigende Bewegungsumwandlung geschaffen. Durch das Ausbilden einer mit einer Axialrichtungs- und Umfangsrichtungskomponente verlaufenden Führungsbahn am Grundkörper kann eine definierte Bewegungsumwandlung erzeugt werden. Dadurch, daß das Schiebeelement selbst eine reine Linearbewegung ausführt, werden unerwünschte Kreisbewegungen oder gekrümmte Bewegungskomponenten für ein angekoppeltes Übertragungselement verhindert.

Nach einer besonderen Ausführungsform der Erfindung greifen ein oder mehrere Führungszapfen in eine jeweilige korrespondierende Nut am Grundkörper ein, wobei die Nut beispielsweise als den Grundkörper durchbrechender Schlitz oder als den Grundkörper nicht durchbrechende Rinne gestaltet sein kann. Je nachdem, ob der als Teil des Schiebeelementes vorgesehene Zylindermantel koaxial von dem Grundkörper aufgenommen wird oder umgekehrt den Grundkörper umgibt, befindet sich die Rinne dann an der Innen- oder der Außenseite des Mantels des Grundkörpers.

Nach einer Weiterbildung der Erfindung verläuft die Führungsbahn am Mantel des Grundkörpers als umlaufend geschlossene Mantelkurve, oder es sind mehrere, in Umfangsrichtung parallel versetzt angeordnete Führungsbahnabschnitte vorgesehen.

Zu diesem Zweck können zum Beispiel in ein oder mehrere Nuten vorzugsweise mehrere, in Umfangsrichtung äquidistant am Zylindermantel des Schiebeelementes angeordnete Führungszapfen eingreifen. Dies ergibt eine sehr gleichmäßige Kraftbelastung des Grundkörpers und des Schiebeelement-Zylindermantels während der Bewegungsumwandlung.

Nach einer Weiterbildung der Erfindung ist die Führungsnut in wenigstens einer ihrer beiden Endbereiche in Umfangsrichtung L-förmig abgebogen ausgebildet. Durch diese abgebogene Gestaltung des Führungsbahnendbereiches wird dort eine Verriegelung gegenüber einer Linearbewegungsrückwirkung erzielt, d. h. das durch Drehen des Grundkörpers in diese verriegelte Endstellung verbrachte Schiebeelement kann durch Gegendrücken nicht mehr zurückgeschoben werden, vielmehr ist dies erst nach einem gegensinnigen Drehen des Grundkörpers möglich.

Nach einer Weiterbildung der Erfindung sind die Bauteile der Stelleinrichtung in einem gemeinsamen Gehäuse integriert angeordnet. Das als Hülse ausgebildete Schiebeelement ist drehfest in dem Gehäuse gelagert.

Nach einer Weiterbildung der Erfindung ist der Grundkörper mit einer Rückstellfeder derart gekoppelt, daß die beim Verbringen der Lichteinheit von einer ersten Betriebsposition in eine zweite Betriebsposition eine Federenergie in der Feder gespeichert wird, so daß die Lichteinheit ohne Energiezufuhr selbsttätig in die ursprüngliche Betriebsposition zurückführbar ist. Hierdurch kann beispielsweise bei Unterbrechung der Stromzufuhr die Lichteinheit jederzeit von einer Fernlichtposition in eine Abblendlichtposition verbracht werden.

Nach einer Weiterbildung der Erfindung ist die Rückstellfeder als Spiralfeder ausgebildet, die platzsparend koaxial zu dem Grundkörper bzw. zur Hülse angeordnet ist.

Ein Ausführungsbeispiel der Erfindung wird nachfolgend anhand der ausführlichen Beschreibung näher beschrieben.

Es zeigen:
Figur 1 einen Längsschnitt durch einen Scheinwerfer mit einer unterhalb des selben angeordneten Stelleinrichtung,
Figur 2 eine perspektivische Darstellung einer Stelleinrichtung,
Figur 3 eine Seitenansicht eines Grundkörpers der Stelleinrichtung,
Figur 4 eine Darstellung der Abwicklung des Mantels des Grundkörpers und
Figur 5 eine schematische Darstellung der zwei Lichtfunktionspositionen eines Stellstiftes der Stelleinrichtung.

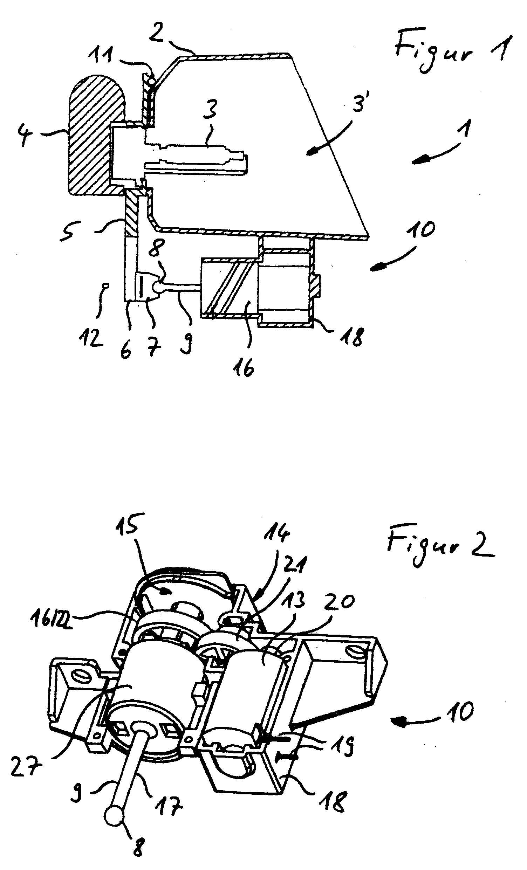

In Figur 1 ist ein Scheinwerfer 1 für Fahrzeuge dargestellt, der im wesentlichen aus einer einen Reflektor 2 und eine zentrale Lichtquelle 3 aufweisenden Lichteinheit 3' gebildet ist. Die Lichtquelle 3 ist als Gasentladungslampe ausgebildet. Zu diesem Zweck ist auf der Rückseite des Reflektors 2 ein Zündgerät 4 angeordnet zur elektrischen Ansteuerung der Gasentladungslampe.

Zur Verstellung der Lichteinheit 3' von einer ersten Lichtfunktionsposition in eine zweite Lichtfunktionsposition, beispielsweise von einer Abblendlichtposition in eine Fernlichtposition oder vice versa, ist die Halterung der Lichtquelle 3 mit einer Schwenkplatte 5 starr verbunden, wobei sich die Schwenkplatte 5 im wesentlichen quer zur optischen Achse der Lichtquelle 3 auf der Rückseite des Reflektors 2 erstreckt. An einem unteren Ende der Schwenkplatte 5 ist ein horizontal zwischen zwei vertikalen starren Tragstegen 5' der Schwenkplatte 5 verlaufendes Federelement 6 angeordnet, das in Fahrtrichtung eine pfannenförmige Aufnahme 7 zur Lagerung eines kugelförmigen Endes 8 eines Stellstiftes 9 aufweist. Der Stellstift 9 ist Bestandteil einer Stelleinrichtung 10, die unterhalb des Reflektors 2 angeordnet und mit diesem fest verbunden ist.

Die Stelleinrichtung 10 bewirkt durch lineare Verschiebung des Stellstiftes 9 ein Verschwenken der Schwenkplatte 5 um eine Schwenkachse 11. In der eingefahrenen Position des Stellstiftes 9 gemäß Figur 1 befindet sich die Lichtquelle 3 in der Abblendlichtposition, in der die Schwenkplatte 5 an einem Anschlag 12' anliegt. In einer ausgefahrenen Stellung des Stellstiftes 9, in der die Schwenkplatte 5 an einem Anschlag 12 anliegt, ist die Lichtquelle 3 nach unten geneigt und in einer Fernlichtposition.

Zum Verstellen des Stellstiftes 9 weist die Stelleinrichtung 10 einen Elektromotor 13 (Gleichstrommotor), ein Getriebe 14, eine Feder 15, einen Grundkörper 16 und ein Schiebeelement 17 als Stellmittel auf, die in einem gemeinsamen Gehäuse 18 gelagert sind. Der Grundkörper 16 und das Schiebeelement 17 bilden ein Bewegungsumwandlungsorgan.

Der Motor 13 weist zwei elektrische Anschlüsse 19 auf und ist mit einer nicht dargestellten Ansteuerschaltung des Kraftfahrzeugs verbunden. Der Motor 13 weist eine Welle 20 auf, die zusammen mit einem achsparallel angeordneten ersten Zahnrad 21 des Getriebes 14 ein Stirnradpaar bildet. Das Getriebe 14 ist als Übersetzungsgetriebe ausgebildet und wandelt die Drehzahl des Motors 13 unter Eingriffstellung mit einem einstückig mit dem Grundkörper 16 verbundenen Zahnrad 22 in eine niedrigerere Drehzahl um.

Der Grundkörper 16 ist achsparallel zu dem Motor 13 angeordnet und weist an einem dem Schiebeelement 17 zugewandten Ende einen zylinderförmigen Mantel 23 mit zwei Führungsnuten 24 auf. Auf einer dem Schiebeelement 17 abgewandten Seite weist der Grundkörper 16 einen Aufnahmeabschnitt 25 auf zur Aufnahme einer Spiral- oder Torsionsfeder 15. Umfangsseitig des zylindrischen Mantels 23 ist die Hülse 27 angeordnet mit zwei nach innen abragenden nicht dargestellten Führungszapfen, die jeweils in die Führungsnut 24 des zylindrischen Mantels 23 eingreifen. Die Hülse 27 ist einstückig mit dem Stellstift 9 verbunden und bildet das Schiebeelement 17. Auf einer dem Stellstift 9 abgewandten Stirnseite ist die Hülse 27 offen ausgebildet. Die Hülse 27 ist mittels nicht dargestellter Führungsmittel, vorzugsweise durch radial nach außen abragende Anformungen, die sich an dem Gehäuse 18 abstützen, drehfest in dem Gehäuse 18 gelagert.
Zur Umwandlung der Drehbewegung des Grundkörpers 16 in axiale Linearbewegung Schiebelements 17 bzw. des Stellstiftes 9 sind die beiden mit Axialrichtungs- und Umfangsrichtungskomponente gestalteten Führungsnuten 24 des Mantels 23 vorgesehen. Sie bilden zusammen mit den in Umfangsrichtung um 180° versetzt angeordneten Führungszapfen der Hülse 27 die Führungselemente, wobei jeweils ein Führungszapfen mit einer Führungsnut 24 ein Führungselementenpaar bildet zur Bildung jeweils einer Axialrichtungs- und Umfangsrichtungskomponente aufweisenden Führungsbahn 29.

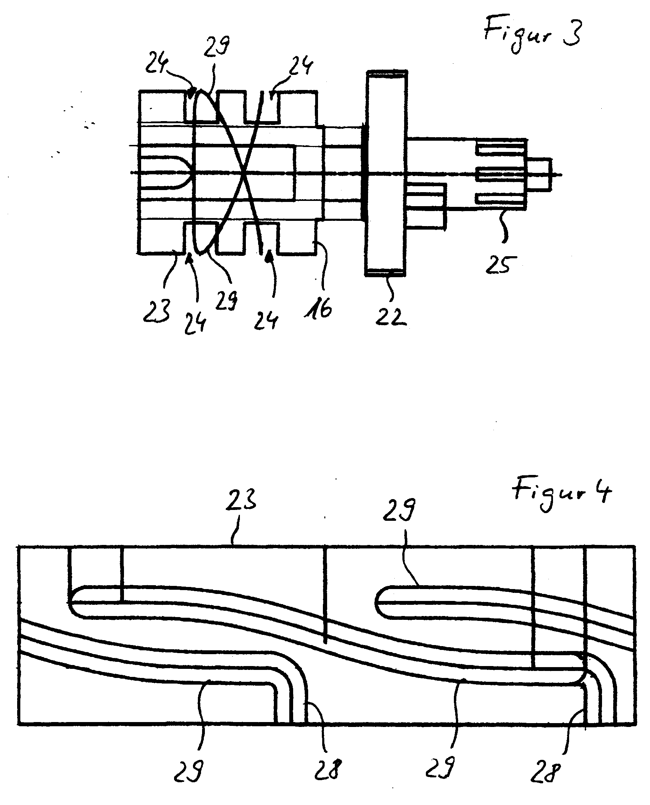

Die beiden Führungsnuten 24 bzw. Führungsschlitze des Grundkörpers 16 schließen jeweils an ihrem dem Stellstift 9 zugewandten Endbereich mit einem in Axialrichtung L-förmig abbiegenden Ende 28 ab. Die L-förmige Abbiegung bewirkt eine definierte Lage des Stellstiftes 9 in der Fernlichtposition des Scheinwerfers 1. Wie aus Figur 4 ersichtlich ist, nimmt die Steigung der Führungsnuten 24 in einem der L-Abbiegung 28 nahen Bereich ab, so daß der Stellstift 9 unter Vermeidung hoher Verzögerungen in die Endlage (Fernlichtposition) bewegt wird. An dem gegenüberliegenden Ende weist die Führungsnut 24 ebenfalls eine geringe Steigung auf, so daß beim Zurückbewegen des Stellstiftes 9 ebenfalls ein "sanfte" Bewegung in seine Endlage (Abblendlichtposition) erzeugt wird. Die größte Steigung der Führungsnut 24 befindet sich in einem mittleren Bereich zwischen den Endbereichen derselben, so daß in diesem Bereich im wesentlichen die Schwenkbewegung der Schwenkplatte 5 stattfindet.

Der Motor 13 ist als Permanentmagnet-Gleichstrommotor ausgebildet und wird mittels eines pulsweiten-modulierten Signals angesteuert. In der ausgefahrenen Position des Stellstiftes 9 (Fernlichtposition) wird der Motor 13 mit einem relativ niedrigen Haltestrom betrieben. Bei Ausfall des Motors 13 bzw. bei Unterbrechung der Stromzufuhr desselben kann die Lichteinheit 3' selbsttätig aus der Fernlichtposition in die Abblendlichtposition verstellt werden. Zu diesem Zweck ist die Spiralfeder 15 vorgesehen, die beim Verdrehen des Grundkörpers 16 aus der Abblendlichtposition in die Fernlichtposition einen Teil der vom Motor 13 abgegebenen Rotationsenergie aufnimmt und als Federenergie speichert. Der Haltestrom des Motors 13 in der Fernlichtstellung desselben ist an die erforderliche Federenergie der Feder 15 angepaßt.

Das Getriebe 14 ist als dreistufiges Getriebe ausgebildet und ermöglicht eine platzsparende und kompakte Anordnung der Stelleinrichtung 10, wobei der Motor 13 an die Länge des Stellweges des Stellstiftes 9 angepaßt werden kann.

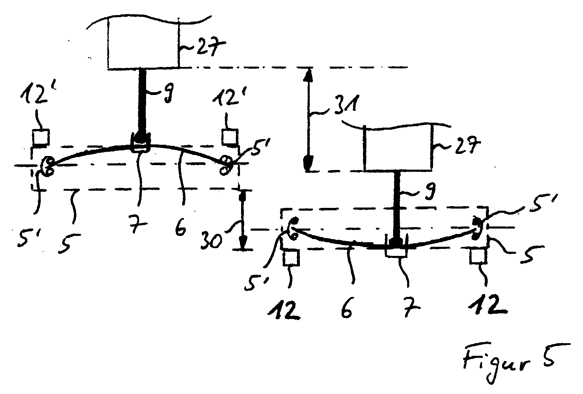

Wie aus Figur 5 ersichtlich ist, ist das elastische Federelement 6 in der Abblendlichtposition (linke Darstellung) und in der Fernlichtposition (rechte Darstellung) in einer gleichen gespannten Lage, wobei es mit der in einem mittleren Bereich desselben fest verbundenen Aufnahme 7 in der Abblendlichtposition in Richtung der Hülse 27 und in der Fernlichtposition entgegen der Hülse 27 gewölbt ist. Dadurch ist ein Schwenkplattenhub 30 der Schwenkplatte 5 um die doppelte Auslenkung des Federelements 6 aus seiner Nulllage kleiner als ein Hülsenhub 31 der Hülse 27. Das Federelement 6 ist an den Enden fest mit den Tragstegen 5' verbunden.

Das Federelement 6 ermöglicht somit einen Toleranzausgleich der Bauteile der Stelleinrichtung 10 und definiert Haltekräfte in den Endlagen. Dabei liegen symmetrische Kraftverhältnisse in den beiden Endlagen vor. Außerdem liegt eine Kraftfreiheit der Schwenkplatte während der eigentlichen Stellbewegung vor. Es findet eine Entkopplung der auf die Schwenkplatte 5 bzw. den Tragstegen 5' einerseits und dem Motor 13 andererseits wirkenden Kraft statt, wobei keine Rückwirkung dynamischer Kräfte von den Tragstegen 5' auf den Motor 13 besteht. Dies führt zu einem sicheren Halten des Stellstiftes 9 in den jeweiligen Endlagen.

## Patentansprüche

1. Scheinwerfer für Fahrzeuge mit einer eine Lichtquelle und einen Reflektor aufweisenden Lichteinheit,
- mit einer Stelleinrichtung zum Umschalten der Lichteinheit in mindestens zwei Lichtfunktionspositionen, wobei die Stelleinrichtung einen Motor mit einer Welle und ein mit der Welle gekoppeltes Steilmittel aufweist, das auf die Lichteinheit einwirkt,
dadurch gekennzeichnet, daß das Stellmittel als mechanisches Bewegungsumwandlungsorgan (16, 17, 23, 24, 27) ausgebildet ist,
- mit einem drehbeweglich gehaltenen Grundkörper (16), der an seinem Mantel (23) ein erstes Führungselement (24) aufweist, und
- mit einem axialbeweglich gehaltenen Schiebeelement (17), das ein mit dem ersten zusammenwirkendes, zweites Führungselement aufweist, wobei
- die beiden zusammenwirkenden Führungselemente (24) eine am Mantel (23) mit einer Axialrichtungs- und einer Umfangsrichtungskomponente verlaufende Führungsbahn (29) definieren.

2. Scheinwerfer nach Anspruch 1, dadurch gekennzeichnet, daß das Führungselement des Grundkörpers (16) wenigstens eine mit einer Axialrichtungs- und einer Umfangsrichtungskomponente verlaufende Führungsnut (24) aufweist und daß das Schiebeelement (17) eine Hülse (27) mit einem innen oder außen an den Grundkörper (16) koaxial angrenzenden Zylindermantel aufweist, an dem als das zweite Führungselement wenigstens ein die jeweilige Führungsnut (24) des Grundkörpers (16) eingreifender Führungszapfen angeordnet ist.

3. Scheinwerfer nach Anspruch 1 oder 2, dadurch gekennzeichnet, daß die Führungselemente (24) des Grundkörpers (16) und des Schiebeelementes (17) zwei in Umfangsrichtung um 180° versetzt zueinander angeordnete Führungsbahnen (29) bilden.

4. Scheinwerfer nach einem der Ansprüche 1 bis 3, dadurch gekennzeichnet, daß die Führungsnut (24) in wenigstens einem ihrer beiden Endbereiche (28) in Axialrichtung L-förmig abgebogen ausgebildet ist.

5. Scheinwerfer nach einem der Ansprüche 1 bis 4, dadurch gekennzeichnet, daß die Hülse (27) mittels Führungsmittel drehfest in einem die Stelleinrichtung (10) umgebenden Gehäuse (18) gehalten ist.

6. Scheinwerfer nach einem der Ansprüche 1 bis 5, dadurch gekennzeichnet, daß der Grundkörper (16) über ein Getriebe (14) mit der Welle (20) des Motors (13) gekoppelt ist.

7. Scheinwerfer nach einem der Ansprüche 1 bis 6, dadurch gekennzeichnet, daß der Grundkörper (16) mit einer Rückstellfeder (15) gekoppelt ist, derart, daß beim Verbringen der Lichteinheit (3') von der ersten Lichtfunktionsposition in die zweite Lichtfunktionsposition eine Rückstellkraft erzeugt wird, die ein selbsttätige Zurückverbringen der Lichteinheit (3') in die erste Lichtfunktionsposition ermöglicht.

8. Scheinwerfer nach einem der Ansprüche 1 bis 7, dadurch gekennzeichnet, daß die Rückstellfeder als Spiralfeder (15) ausgebildet ist.

9. Scheinwerfer nach einem der Ansprüche 1 bis 8, dadurch gekennzeichnet, daß die Steigung der Führungsbahn (29) in einem mittleren Abschnitt am größten und in gegenüberliegenden Endbereichen am geringsten ist.

10. Scheinwerfer nach einem der Ansprüche 1 bis 9, dadurch gekennzeichnet, daß das Schiebeelement (17) kugelgelenkig mit einer fest mit der Lichteinheit (3') verbundenen Schwenkplatte (5) gekoppelt ist.

11. Scheinwerfer nach einem der Ansprüche 1 bis 10, dadurch gekennzeichnet, daß das Schiebeelement (17) an ein fest mit der Schwenkplatte (5) verbundenes Federelement (6) gekoppelt ist.
